# EUROPEAN PATENT APPLICATION

(11) **EP 2 595 445 A1**
(43) Date of publication of application: **22.05.2013**
(21) Application number: 11816070.4
(22) Date of filing: 01.08.2011
(51) Int. Cl.: H04W 76/02

(54) **METHOD AND SYSTEM FOR ESTABLISHING SESSION**

(30) Priority: 24.03.2011 CN 201110082110; 09.08.2010 CN 201010251627
(71) Applicant: ZTE Corporation, Shenzhen, Guangdong 518057 (CN)
(72) Inventor: ZHOU, Xiaoyun, Shenzhen Guangdong 518057 (CN); ZONG, Zaifeng, Shenzhen Guangdong 518057 (CN)
(74) Representative: Protector IP Consultants AS
(86) International application number: PCT/CN2011/077862
(87) International publication number: WO 2012/019511

(57) **Abstract**

A method for establishing a session is disclosed, in which the first policy server sends a request message to the second policy server when needing to establish the session with the second policy server, for requesting the second policy server to initiate and establish a session with the first policy server; the second policy server initiates and establishes the session with the first policy server, based on the request message. A system for establishing a session is also disclosed. With the disclosure, even if the first policy server cannot establish a session with the second policy server, it may send a request to the second policy server, for requesting the second policy server to establish the session. Therefore, the session is established more flexibly. In addition, in the case that the session established by the second policy server is applicable to policy control, the effectiveness of session establishment is improved.

## Description

### TECHNICAL FIELD

The disclosure relates to the mobile communication field, and in particular to a method and a system for establishing a session.

### BACKGROUND

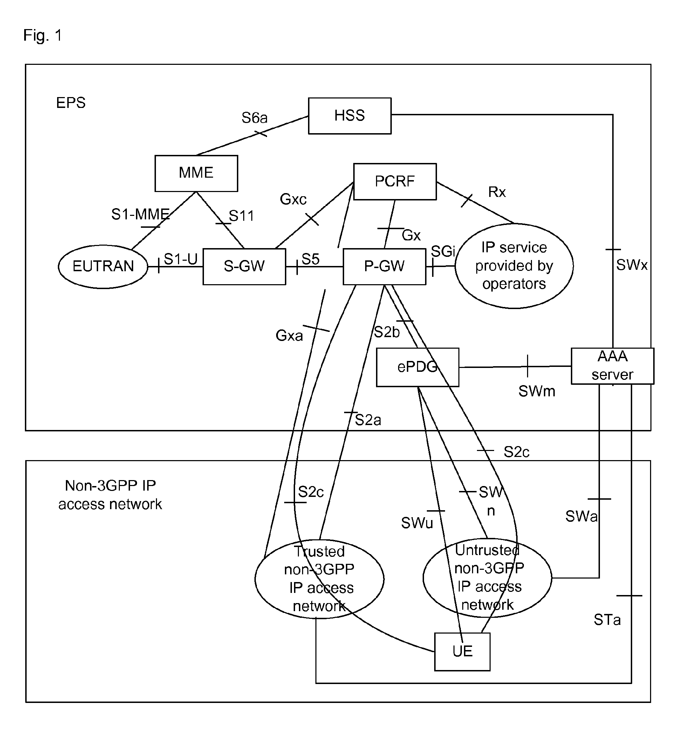

Fig. 1 shows an architecture diagram of an Evolved Packet System (EPS) in a non-roaming scenario. As shown in Fig. 1, EPS consists of an Evolved Universal Terrestrial Radio Access Network (E-UTRAN), a Mobility Management Entity (MME), a Serving Gateway (S-GW), a Packet Data Network Gateway (P-GW or PDN GW), a Home Subscriber Server (HSS), a Policy and Charging Rules Function (PCRF) entity and other support nodes. PCRF is a core of Policy and Charging Control (PCC), and is responsible for making the policy decisions and charging rules. PCRF provides network control rules based on service data flows; the network control involves detection, Gating Control and Quality of Service (QoS) control of the service data flows, and the charging rules based on the data flows and the like. PCRF sends the policy and charging rules which are made by itself to the Policy Charging Enforcement Function (PCEF) to execute. Meanwhile, PCRF must guarantee the consistency between the rules and user subscription information. The bases for making the policy and charging rules by PCRF includes: acquiring service-associated information from an Application Function (AF); acquiring user PCC subscription information from the Subscription Profile Repository (SPR); and acquiring information regarding hosted network from PCEF.

EPS is capable of interworking with a non 3rd Generation Partnership Project (non-3GPP) system via an S2a/b/c interface. P-GW acts as an anchor point between the 3GPP system and the non-3GPP system. As shown in Fig. 1, access to the non-3GPP system is divided into trusted non-3GPP Internet Protocol (IP) access and untrusted non-3GPP IP access; for the trusted non-3GPP IP access, P-GW can be directly connected via the S2a interface; and for the untrusted non-3GPP IP access, P-GW cannot be connected without an Evolved Packet Data Gateway (ePDG), the interface between ePDG and P-GW is an S2b interface, and Internet Protocol Security (IPSec) is used to encrypt signalling and data between a User Equipment (UE) and ePDG. S2c provides the user plane related control and mobility support between UE and P-GW, and supports a mobility management protocol, Mobile Internet Protocol Version 6 (IPv6) support for dual stack Hosts and Routers (DSMIPv6).

At present, many operators are interested in Fixed Mobile Convergence (FMC), and have been studying interconnection and interworking between 3GPP and Broadband Forum (BBF). In a scenario where a user accesses a mobile core network via BBF, QoS should be guaranteed over the whole data transmission path (the data would pass through the fixed network and the mobile network). Currently, two scenarios regarding interoperability between BBF access and 3GPP are mainly studied.

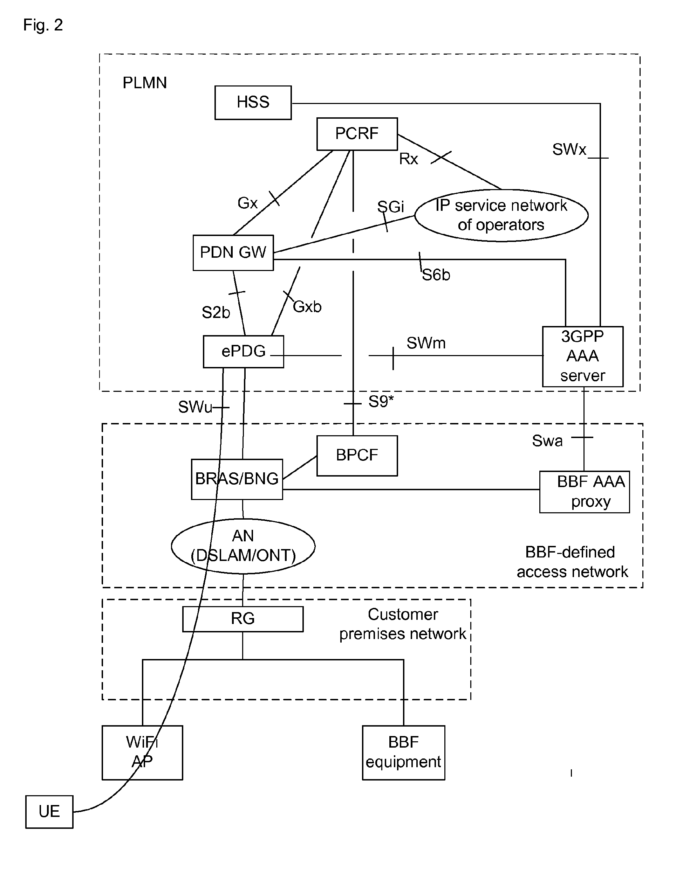

Fig. 2 is a schematic view showing UE accessing the EPS core network via a Wireless Local Area Network (WLAN). As shown in Fig. 2, the BBF access network is taken as an untrusted non-3GPP access network, after the UE accesses the BBF access network, a Broadband Remote Access Server (BRAS)/ Broadband Network Gateway (BNG) executes 3GPP-based access authentication, and at the same time, the Broadband Policy Control Function (BPCF) of BBF actively initiates an S9* session to interact with 3GPP PCRF. Thereby, PCRF, when implementing QoS authorization, can interact with BPCF; and the BPCF performs resource admission control.

However, in some scenarios, the BBF access network cannot always perceive the UE access, or the BBF access network cannot support 3GPP-based access authentication. In such scenarios, BPCF cannot actively initiate establishment of the S9* session, and thus cannot implement QoS control for the UE access. At this time, only PCRF can initiate a session establishment process to BPCF. However, it remains an unsolved problem in the prior art, regarding how to establish the S9* session.

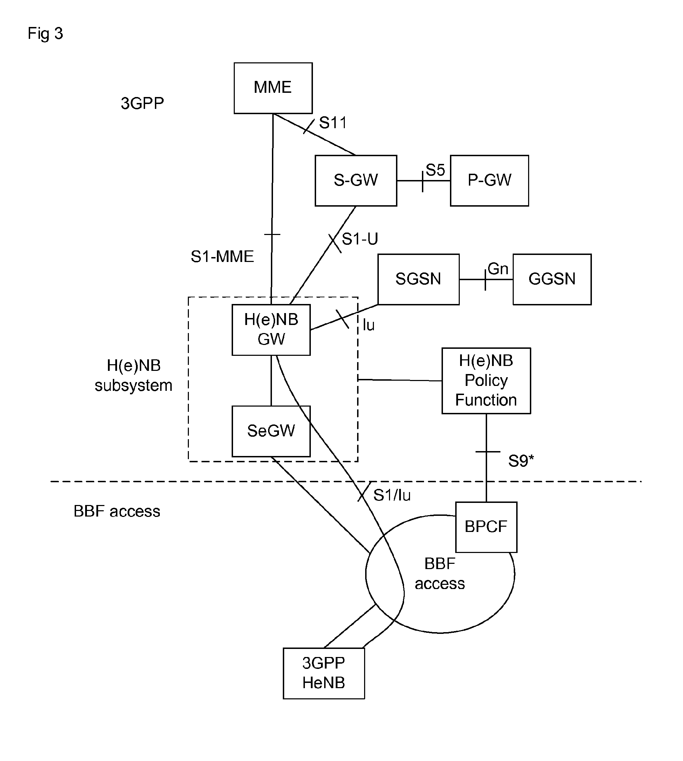

Fig. 3 is a schematic view showing H(e)NB accessing the EPS core network via the BBF access network. As shown in Fig. 3, when 3GPP UE accesses the 3GPP core network via HeNB to access a service, the required QoS cannot exceed the QoS which can be provided by the BBF access network. As the BBF access network cannot perceive 3GPP UE access via H(e)NB, the session establishment process only can be initiated to BPCF by H(e)NB Policy Function. Similarly, it remains an unsolved problem in the prior art, regarding how to establish the S9* session.

In addition, in the conventional PCC architecture, the Diameter protocol is adopted to establish a session for the policy control session, such as a Gx session between PCEF and PCRF. When PCEF needs to request a policy from PCRF, if the Gx session has not been established between PCEF and PCRF, PCEF sends a Credit Control Request (CCR) message to PCRF, and requests to establish the Gx session with the PCRF. the field of request type in the message can be set as INITIAL_REQUEST. PCRF returns a Credit Control Answer (CCA) message to PCEF after receiving the CCR message. PCRF may then actively issue the policy via a Re-Authorization Request (RAR), or issue the policy by means of a CCA message, at PCEF's request.

However, in an FMC scenario, if BBF cannot perceive 3GPP UE access, PCRF needs to actively initiate session establishment to BPCF. In this case, according to the prior art, PCRF sends a CCR message to BPCF, and the field of request type in the message can be set as the INITIAL_REQUEST. Once the session is established, PCRF only can actively send a CCR message to BPCF, or only can send the RAA message at BPCF's request, and PCRF cannot issue policies by means of a RAR or CCA message.

As can be seen, in the prior art, there are some scenarios in which it is impossible to establish a session and, there are also some scenarios in which even if a session is established, it cannot be used for policy control.

### SUMMARY

In view of the above, a method and a system for establishing a session is provided, which can improve the flexibility and effectiveness of session establishment.

To achieve the above purpose, the technical solutions of the disclosure are provided as follows.

A method for establishing a session includes: sending, by a first policy server, a request message to a second policy server, for requesting the second policy server to initiate and establish a session with the first policy server; initiating and establishing, by the second policy server, the session with the first policy server, based on the request message.

The request message may carry identification information of requesting established session to identify the session established between the second policy server and the first policy server.

The request message may be a Credit Control Request (CCR) message or an Authorize Authenticate Request (AAR) message carrying a session establishment requesting indication,

Initiating, by the second policy server, establishment of the session with the first policy server, based on the request message may include: sending, by the second policy server, after receiving the CCR message or the AAR message carrying the session establishment requesting indication, a credit control session establishment request message to the first policy server; and sending, by the first policy server, a Credit Control Answer (CCA) message to the second policy server.

The method may further include: after the second policy server receives the CCR message or the AAR message carrying the session establishment requesting indication, returning, by the second policy server, the CCA message or an Authorize Authenticate Answer (AAA) message to the first policy server.

The first policy server may be a Policy and Charging Rules Function (PCRF), and the second policy server may be a Broadband Policy Control Function (BPCF); or the first policy server may be a Home PCRF (H-PCRF), and the second policy server may be a Visited PCRF (V-PCRF); or the first policy server may be an H(e)NB Policy Function, and the second policy server may be the BPCF.

A method for establishing a session includes: sending, by a policy server, a request message to a policy enforcement entity or a charging function entity; initiating and establishing, by the policy enforcement entity or the charging function entity, a session with the policy server based on the request message.

The request message carries identification information of requesting established session, for identifying the session established between the policy enforcement entity or the charging function entity and the policy server.

A system for establishing a session includes a first policy server and a second policy server, wherein the first policy server is configured to send a request message to the second policy server, and to request the second policy server to initiate and establish a session with the first policy server; and the second policy server is configured to initiate and establish the session with the first policy server based on the request message from the first policy server.

The first policy server may further be configured to carry the identification information of requesting established session in the request message to identify the session established between the second policy server and the first policy server.

The request message sent by the first policy server may be a Credit Control Request (CCR) message or an Authorize Authenticate Request (AAR) message carrying a session establishment requesting indication, and the second policy server may initiate the session with the first policy server based on the request message from the first policy server by sending a credit control session establishment request message to the first policy server after receiving the CCR message or the AAR message carrying the session establishment requesting indication, and the first policy server may further be configured to send a Credit Control Answer (CCA) message to the second policy server based on the credit control session establishment request message.

The second policy server may further be configured to return the CCA message or an Authorize Authenticate Answer (AAA) message to the first policy server after receiving the CCR message or the AAR message carrying the session establishment requesting indication.

The first policy server may be a Policy and Charging Rules Function (PCRF), and the second policy server may be a Broadband Policy Control Function (BPCF); or, the first policy server may be a Home PCRF (H-PCRF), and the second policy server may be a Visited PCRF (V-PCRF); or, the first policy server may be an H(e)NB Policy Function, and the second policy server may be the BPCF.

A system for establishing a session includes a policy server, a policy enforcement entity or a charging function entity; wherein the policy server is configured to send a request message to the policy enforcement entity or the charging function entity, and to request the policy enforcement entity or the charging function entity to initiate and establish a session with the policy server; and the policy enforcement entity or the charging function entity is configured to initiate and establish the session with the policy server based on the request message from the policy server.

The request message sent by the policy server may carry identification information of requesting established session to identify the session established between the policy enforcement entity or the charging function entity and the policy server.

In the method and system for establishing session according to the embodiment of the disclosure, when the first policy server needs to establish a session with the second policy server, the first policy server sends a request message to the second policy server, so as to request the second policy server to initiate and establish the session with the first policy server; or, when the policy server needs to establish a session with the policy enforcement entity or the charging function entity, the policy server sends a request message to the policy enforcement entity or the charging function entity, so as to request the policy enforcement entity or the charging function entity to initiate and establish the session with the policy server. With the disclosure, even if the first policy server cannot establish the session with the second policy server, the first policy server can request the second policy server to establish a session by sending a request to the second policy server; even if the policy server cannot establish the session with the policy enforcement entity or the charging function entity, the policy server can request the policy enforcement entity or the charging function entity to establish the session by sending a request to the policy enforcement entity or the charging function entity. Thus, the embodiment of the disclosure can improve the flexibility of session establishment. In addition, the disclosure can improve the effectiveness of session establishment in the case that the session established by the second policy server can be used for the policy control.

### BRIEF DESCRIPTION OF THE DRAWINGS

Fig. 1 is a schematic view showing the architecture of EPS in a non-roaming scenario;
Fig. 2 is a schematic view showing UE accessing an EPS core network via WLAN;
Fig. 3 is a schematic view showing H(e)NB accessing the EPS core network via a BBF access network;
Fig. 4 shows a flow diagram of a session establishing method according to the disclosure;
Fig. 5 shows a flow diagram of a session establishing method according to embodiment 1 of the disclosure;
Fig. 6 shows a flow diagram of a session establishing method according to embodiment 2 of the disclosure.

### DETAILED DESCRIPTION

The basic principle of the disclosure lies in that, when the first policy server needs to establish a session with the second policy server, the first policy server sends a request message to the second policy server, so as to request the second policy server to initiate and establish the session with the first policy server; or, when the policy server needs to establish a session with the policy enforcement entity or the charging function entity, the policy server sends a request message to the policy enforcement entity or the charging function entity, so as to request the policy enforcement entity or the charging function entity to initiate and establish the session with the policy server.

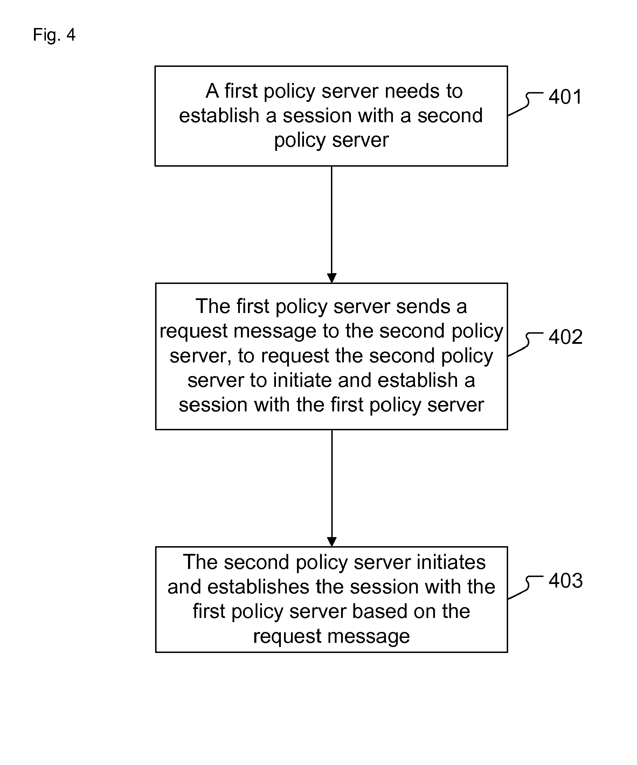

Fig. 4 shows a flow diagram of a session establishing method according to an embodiment of the disclosure. As shown in Fig. 4, the method includes the following steps:
Step 401: the first policy server needs to establish a session with the second policy server.

Here, the first policy server and the second policy server may be various entities. For example, the first policy server may be a PCRF, and the second policy server may be a BPCF; or, the first policy server may be an H-PCRF, and the second policy server may be a V-PCRF; or, the first policy server may be an H(e)NB Policy Function, and the second policy server may be the BPCF.

Step 402: the first policy server sends a request message to the second policy server, so as to request the second policy server to initiate and establish the session with the first policy server.

Here, the request message sent to the second policy server by the first policy server is generally a CCR message or an AAR message, wherein the CCR message or the AAR message carries a session establishment requesting indication.

The request message can further carry the identification information of requesting established session, wherein, the identification information of requesting established session is configured to identify the session established between the second policy server and the first policy server.

Step 403: the second policy server initiates and establishes the session with the first policy server based on the request message.

After receiving the CCR message or the AAR message from the first policy server, the second policy server may generally return a CCA message or an AAA message.

The second policy server initiates and establishes a session with the first policy server generally by the following operations: the second policy server sends a credit control session establishment request message, which may carry identification information of requesting established session, to the first policy server; the first policy server sends the CCA message to the second policy server.

It should note that, the disclosure also can be used for policy control session establishment between the policy server and the policy enforcement entity. For example, the policy server may be the PCRF, the policy enforcement entity may be a Traffic Detection Function (TDF). PCRF may request TDF to initiate and establish a TDF session with PCRF, according to a process similar to that is shown in Fig. 4. The policy server may be PCRF or BPCF. The policy enforcement entity may be a Policy Enforcement Point located in a Broadband Remote Access Server (BRAS) / Broadband Network Gateway (BNG). Accordingly, the identification information of requesting established session carried in the request message is used to identify the session established between the policy enforcement entity and the policy server.

It should note that, the disclosure also can be used for establishing the policy control session between the policy server and the charging function entity. For example, the policy server may be PCRF, and the charging function entity may be an Online Charging System (OCS). PCRF may request OCS to initiate and establish a policy control session with PCRF, according to a process similar to that is shown in Fig. 4. The policy server may also be PCRF, the charging function entity may be an Offline Charging System (OFCS). Accordingly, the identification information of requesting established session carried in the request message is used to identify the session established between the charging function entity and the policy server.

A corresponding system for establishing a session is provided in the embodiment of the disclosure. The system includes a first policy server and a second policy server.

The first policy server is configured to send a request message to the second policy server when needing to establish the session with the second policy server, for requesting the second policy server to initiate and establish a session with the first policy server; the second policy server is configured to initiate and establish the session with the first policy server based on the request message from the first policy server.

The first policy server may further be configured to carry the identification information of requesting established session in the request message to identify the session established between the second policy server and the first policy server.

The request message sent by the first policy server may be a CCR message or an AAR message carrying a session establishment requesting indication, and the second policy server may initiate the session with the first policy server based on the request message from the first policy server by sending a credit control session establishment request message to the first policy server after receiving the CCR message or the AAR message carrying the session establishment requesting indication, and the first policy server may further be configured to send a Credit Control Answer (CCA) message to the second policy server based on the credit control session establishment request message.

The second policy server may further be configured to return the CCA message or an Authorize Authenticate Answer (AAA) message to the first policy server after receiving the CCR message or the AAR message carrying the session establishment requesting indication.

The first policy server may be a Policy and Charging Rules Function (PCRF), and the second policy server may be a Broadband Policy Control Function (BPCF); or the first policy server may be a Home PCRF (H-PCRF), and the second policy server may be a Visited PCRF (V-PCRF); or the first policy server may be an H(e)NB Policy Function, and the second policy server may be the BPCF.

A corresponding system for establishing a session is provided in the embodiment of the disclosure. The system includes a policy server, a policy enforcement entity and a changing function entity. The policy server may be configured to send a request message to the policy enforcement entity or the charging function entity, for requesting the policy enforcement entity or the charging function entity to initiate and establish a session with the policy server. The policy enforcement entity or the charging function entity may be configured to initiate and establish the session with the policy server based on the request message from the policy server.

The policy server may further be configured to carry the identification information of requesting established session in the request message, for identifying the session established between the policy enforcement entity or the charging function entity and the policy server.

The technical solution of the disclosure is further described below with reference to the embodiments in details.

### Embodiment 1

The embodiment is applied in the scenario where UE accesses the EPS core network via WLAN, the first policy server is PCRF, and the second policy server is BPCF.

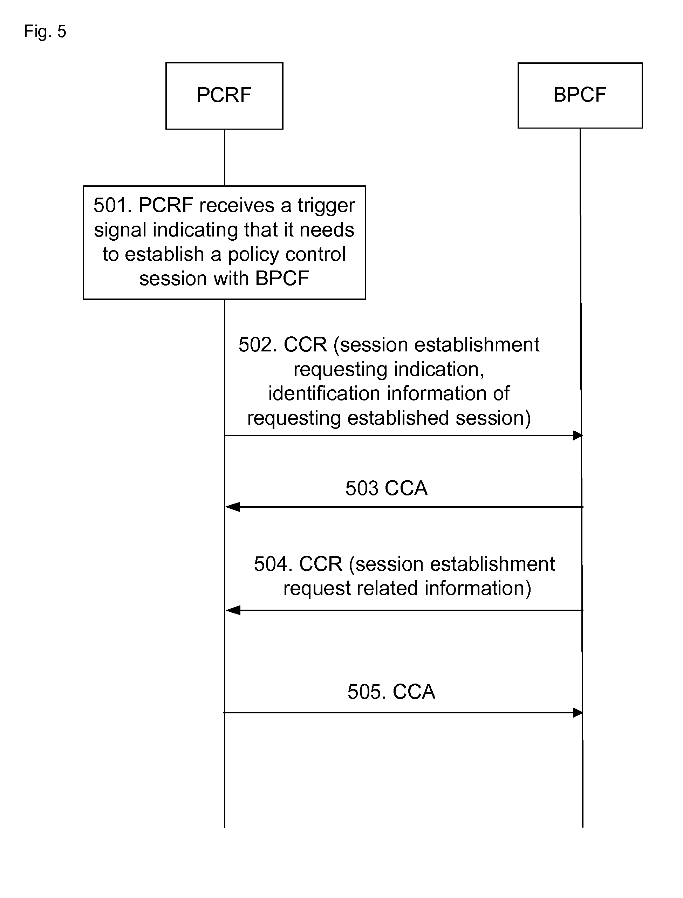

Fig. 5 shows a flow diagram of a session establishing method according to embodiment 1 of the disclosure. As shown in Fig. 5, the method includes the following steps:
Step 501: PCRF receives a trigger signal which indicates a policy control session with the BPCF needs to be established.

The trigger signal may be a policy control session message sent to PCRF by ePDG or P-GW, and the policy control session message carries information indicating UE access via WLAN. After receiving the policy control session message, PCRF determines to establish the policy control session with BPCF, so as to provide a policy for the BBF access network and to request the admission control of the BBF access network.

Step 502: PCRF sends to BPCF a credit control request message, which carries a session establishment requesting indication. The indication is performed by carrying a specific parameter in the message or by including the session establishment request indication information in the message itself.

Here, the session establishment requesting indication is used to notify the BPCF to initiate and establish the policy control session.

The CCR message may further carry the identification information of requesting established session, which can be used as the identification for BPCF initiating the session in the future, so that PCRF can determine whether BPCF has initiated the session which is requested to establish. The identification information of requesting established session may include one or more of the position information when UE accesses the BBF access network, the unique identification assigned to PCRF, the user identification, the IP address of user and the PDN identification.

Step 503: BPCF returns the CCA message to PCRF after receiving the CCR message.

Step 504: BPCF sends the credit control session establishment request message to PCRF based on the session establishment requesting indication in the CCR message or according to the message itself, for requesting to establish the policy control session.

The credit control session establishment request message can carry the identification information of requesting established session which is issued in Step 502, for notifying PCRF that this message is used to establish the policy control session which is requested to establish in Step 502.

Step 505: PCRF sends the CCA message to BPCF.

Hereafter, PCRF can issue the policy via the policy control session established in Step 504 and Step 505; BPCF also can report the policy enforcement result, the admission control result and the events via the policy control session.

Specifically, the policy control session in this embodiment may be a gateway control session.

The policy control session established in Step 502 and Step 503 in this embodiment can be established whenever PCRF requests BPCF to establish the policy control session, and can be terminated after BPCF initiates and establishes the policy control session; the termination can be initiated by either PCRF or BPCF. In this case, the request type in the CCR message in Step 502 is set as INITIAL_REQUEST. In addition, the policy control session established in Step 502 and Step 503 in the embodiment can be in the device-level; the policy control request message is sent when BPCF initially requests BPCF to establish the policy control session, and the policy control session is not terminated after BPCF initiates and establishes the policy control session. When PCRF re-requests BPCF to establish the policy control session, the policy control session established during the initial request can be employed. In this case, for the initial request, the request type in the CCR message in Step 502 is set as INITIAL_REQUEST, and for the re-request, the request type in the CCR message in the Step 502 is set as UPDATE_REQUEST.

In this embodiment, the messages in Steps 502 and 503 may also not be used to establish the policy control session. That is, the messages are only used to notify that BPCF needs to establish the policy control session with PCRF, and are not used to establish a session. Therefore, there is no need to perform the operation of terminating the session.

In this embodiment, the PCRF can request BPCF to establish the policy control session by means of other messages, such as sending the AAR message in Step 502, and sending the AAA message in Step 503.

Therefore, the disclosure is not limited by the message type in the Steps 502 and 503.

### Embodiment 2

The embodiment is applied in the scenario where UE accesses the EPS core network via H(e)NB; the first policy server is the H(e)NB Policy Function, the second policy server is BPCF; the policy control session needs to be established between the H(e)NB Policy Function and BPCF. Wherein, the H(e)NB Policy Function can be integrated in PCRF.

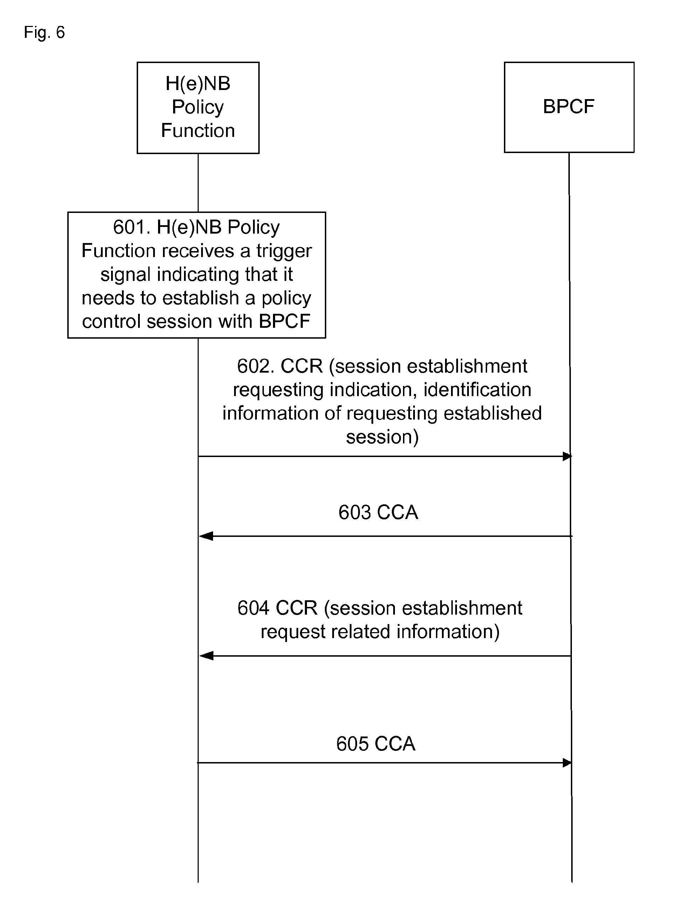

Fig. 6 shows a flow diagram of a session establishing method according to embodiment 2 of the disclosure. As shown in Fig. 6, the method includes the following steps:
Step 601: the H(e)NB Policy Function receives a trigger signal which indicates a policy control session with the BPCF needs to be established.

The trigger signal may be a policy control session message sent to the H(e)NB Policy Function by H(e)NB GW, SeGW, or MME. After receiving the policy control session message, PCRF determines to establish the policy control session with BPCF, so as to provide a policy for the BBF access network and to request the admission control of the BBF access network.

Step 602: the H(e)NB Policy Function sends the CCR message to BPCF, wherein the CCR message carries the session establishment requesting indication. The indication is performed by carrying a specific parameter in the message or by including the session establishment request indication information in the message itself.

Here, the session establishment requesting indication is used to notify the BPCF to initiate and establish the policy control session.

The CCR message may further carry identification information of requesting established session, which can be used as an identification for BPCF initiating the session in the future. The identification information of requesting established session may include one or more of the position information when H(e)NB accesses the BBF access network, the H(e)NB identification, and the IP address of H(e)NB.

Step 603: BPCF returns the CCA message to the H(e)NB Policy Function after receiving the CCR message.

Step 604: BPCF sends the credit control session establishment request message to the H(e)NB Policy Function based on the session establishment requesting indication in the CCR message, to request to establish the policy control session.

The CCR message may carry identification information of requesting established session which is issued in Step 602, for notifying the H(e)NB Policy Function that this message is used to establish the policy control session which is requested to establish in Step 602.

Step 605: the H(e)NB Policy Function sends the CCA message to BPCF.

Hereafter, the H(e)NB Policy Function can issue the policy via the policy control session established in Step 604 and Step 605, and BPCF can also report the policy enforcement result, the admission control result and the events via the policy control session.

Specifically, the policy control session in this embodiment may be a gateway control session.

The policy control session established in Step 602 and Step 603 in this embodiment can be established whenever the H(e)NB Policy Function requests BPCF to establish the policy control session, and can be terminated after the BPCF initiates and establishes the policy control session; the termination can be initiated by either the H(e)NB Policy Function or the BPCF. In this case, the request type in the CCR message in Step 602 is set as the INITIAL_REQUEST.

In addition, the policy control session established in Step 602 and Step 603 in the embodiment can be in the device-level; the policy control request message is sent when the H(e)NB Policy Function initially requests BPCF to establish the policy control session, and the policy control session is not terminated after BPCF initiates and establishes the policy control session. When the H(e)NB Policy Function re-requests BPCF to establish the policy control session, the policy control session established during the initial request can be employed. In this case, for the initial request, the request type in the CCR message in Step 602 is set as INITIAL_REQUEST, and for the re-request, the request type in the CCR message in the Step 602 is set as UPDATE_REQUEST.

In this embodiment, the messages in Steps 602 and 603 may also not be used to establish the policy control session. That is, the messages are only used to notify that BPCF needs to establish the policy control session with PCRF, and are not used to establish a session. Therefore, there is no need to perform the operation of terminating the session.

In this embodiment, the H(e)NB Policy Function can request BPCF to establish the policy control session by means of other messages, such as sending an AAR message in Step 602, and sending an AAA message in Step 603. Therefore, Therefore, the disclosure is not limited by the message type in the Steps 602 and 603

It should note that, the processes of establishing the policy control session (which may be referred to as an S9 session) between H-PCRF and V-PCRF are similar to those in the above two embodiments, and thus the description thereof will be omitted here.

The above are only the preferred embodiments of the disclosure, and are not intended to limit the scope of the disclosure.

## Claims

1. A method for establishing a session, comprising:
sending, by a first policy server, a request message to a second policy server, for requesting the second policy server to initiate and establish a session with the first policy server;
initiating and establishing, by the second policy server, the session with the first policy server, based on the request message.

2. The method according to claim 1, wherein the request message carries identification information of requesting established session to identify the session established between the second policy server and the first policy server.

3. The method according to claim 1, wherein the request message is a Credit Control Request (CCR) message or an Authorize Authenticate Request (AAR) message carrying a session establishment requesting indication,
wherein initiating, by the second policy server, establishment of the session with the first policy server, based on the request message comprises:
sending, by the second policy server, after receiving the CCR message or the AAR message carrying the a session establishment requesting indication, a credit control session establishment request message to the first policy server; and
sending, by the first policy server, a Credit Control Answer (CCA) message to the second policy server.

4. The method according to claim 3, further comprising:
after the second policy server receives the CCR message or the AAR message carrying the session establishment requesting indication, returning, by the second policy server, the CCA message or an Authorize Authenticate Answer (AAA) message to the first policy server.

5. The method according to any one of claims 1 to 4, wherein
the first policy server is a Policy and Charging Rules Function (PCRF), and the second policy server is a Broadband Policy Control Function (BPCF); or,
the first policy server is a Home PCRF (H-PCRF), and the second policy server is a Visited PCRF (V-PCRF); or,
the first policy server is an H(e)NB Policy Function, and the second policy server is the BPCF.

6. A method for establishing a session, comprising:
sending, by a policy server, a request message to a policy enforcement entity or a charging function entity;
initiating and establishing, by the policy enforcement entity or the charging function entity, a session with the policy server based on the request message.

7. The method according to claim 6, wherein the request message carries identification information of requesting established session, for identifying the session established between the policy enforcement entity or the charging function entity and the policy server.

8. A system for establishing a session, comprising a first policy server and a second policy server, wherein
the first policy server is configured to send a request message to the second policy server, and to request the second policy server to initiate and establish a session with the first policy server; and
the second policy server is configured to initiate and establish the session with the first policy server based on the request message from the first policy server.

9. The system according to claim 8, wherein the first policy server is further configured to carry the identification information of requesting established session in the request message to identify the session established between the second policy server and the first policy server.

10. The system according to claim 9, wherein the request message sent by the first policy server is a Credit Control Request (CCR) message or an Authorize Authenticate Request (AAR) message carrying a session establishment requesting indication,
wherein the second policy server initiates the session with the first policy server based on the request message from the first policy server by sending a credit control session establishment request message to the first policy server after receiving the CCR message or the AAR message carrying the session establishment requesting indication, and
wherein the first policy server is further configured to send a Credit Control Answer (CCA) message to the second policy server based on the credit control session establishment request message.

11. The system according to claim 9, wherein the second policy server is further configured to return the CCA message or an Authorize Authenticate Answer (AAA) message to the first policy server after receiving the CCR message or the AAR message carrying the session establishment requesting indication.

12. The system according to any one of claims 8 to 11, wherein
the first policy server is a Policy and Charging Rules Function (PCRF), and the second policy server is a Broadband Policy Control Function (BPCF); or,
the first policy server is a Home PCRF (H-PCRF), and the second policy server is a Visited PCRF (V-PCRF); or,
the first policy server is an H(e)NB Policy Function, and the second policy server is the BPCF.

13. A system for establishing a session, comprising a policy server, a policy enforcement entity or a charging function entity, wherein
the policy server is configured to send a request message to the policy enforcement entity or the charging function entity, and to request the policy enforcement entity or the charging function entity to initiate and establish a session with the policy server; and
the policy enforcement entity or the charging function entity is configured to initiate and establish the session with the policy server based on the request message from the policy server.

14. The system according to claim 13, wherein the request message sent by the policy server carries identification information of requesting established session information to identify the session established between the policy enforcement entity or the charging function entity and the policy server.
